# EUROPÄISCHE PATENTSCHRIFT

(11) **EP 0 496 727 B1**
(45) Veröffentlichungstag und Bekanntmachung des Hinweises auf die Patenterteilung: **18.09.1996**
(21) Anmeldenummer: 89903959.8
(22) Anmeldetag: 14.04.1989
(51) Int. Cl.: B60T 3/00

(54) **Sicherheits-Unterlegekeil für Strassenfahrzeuge**
Safety wheel-chock for vehicles
Cale de freinage de sécurité pour véhicules

(30) Priorität: 14.04.1988 AT 969/88; 16.08.1988 AT 2033/88
(43) Veröffentlichungstag der Anmeldung: 05.08.1992
(73) Patentinhaber: ROSSMANN, Viktor, A-8591 Maria Lankowitz (AT)
(72) Erfinder: ROSSMANN, Viktor, A-8591 Maria Lankowitz (AT)
(86) Internationale Anmeldenummer: AT8900036
(87) Internationale Veröffentlichungsnummer: WO8909709

(56) Entgegenhaltungen:
- BE-A- 764 004
- DE-U- 8 712 182
- FR-A- 918 873
- FR-A- 1 120 970
- FR-A- 1 305 914
- FR-A- 1 445 750
- FR-A- 2 182 720
- US-A- 3 054 477
- US-A- 3 661 229
- US-A- 4 186 823

## Beschreibung

Der Unterlegekeil auch Bremsschuh oder Hemmschuh genannt,diente schon seit jeher als Sicherung für abgestellte schwerere Kraftfahrzeuge, wie Omnibusse, Lastkraftfahrzeuge und dergleichen. Es gibt schon einige Arten von Unterlegekeilen aus verschiedenen Werkstoffen wie Metall, Stahl oder Holz wie z.B. aus dem Dokument FR-A-2 182 720. Die herkömmlichen Unterlegekeile sind bei ungünstigen Straßenverhältnissen z. B auf ansteigender vereister Fahrbahn oft meist für den harten Winter nicht geeignet, und somit nicht verkehrssicher. Da die Unterseite der herkömmlichen Unterlegekeile oft meist nur glatt vorgesehen ist, und daher für den Winter nicht verkehrssicher sind.

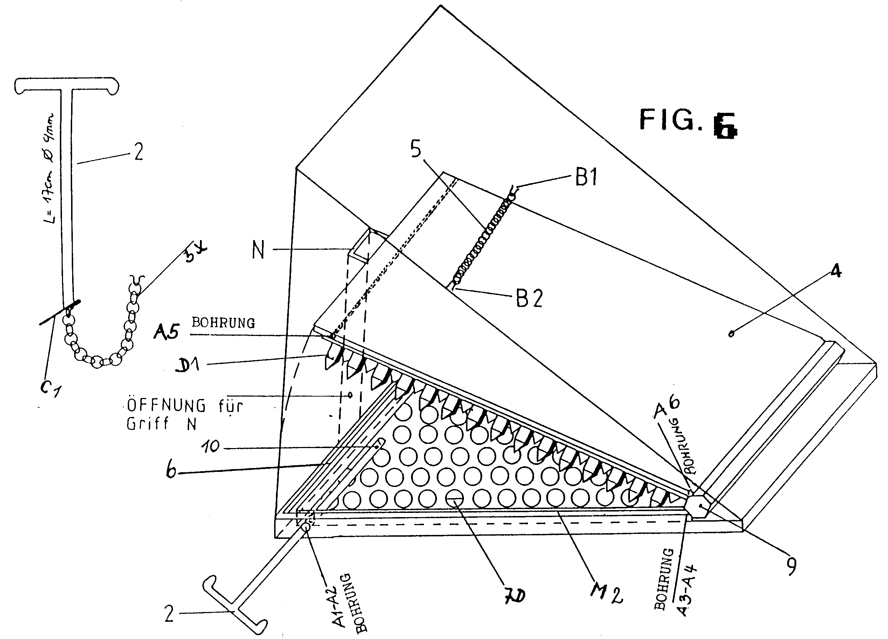

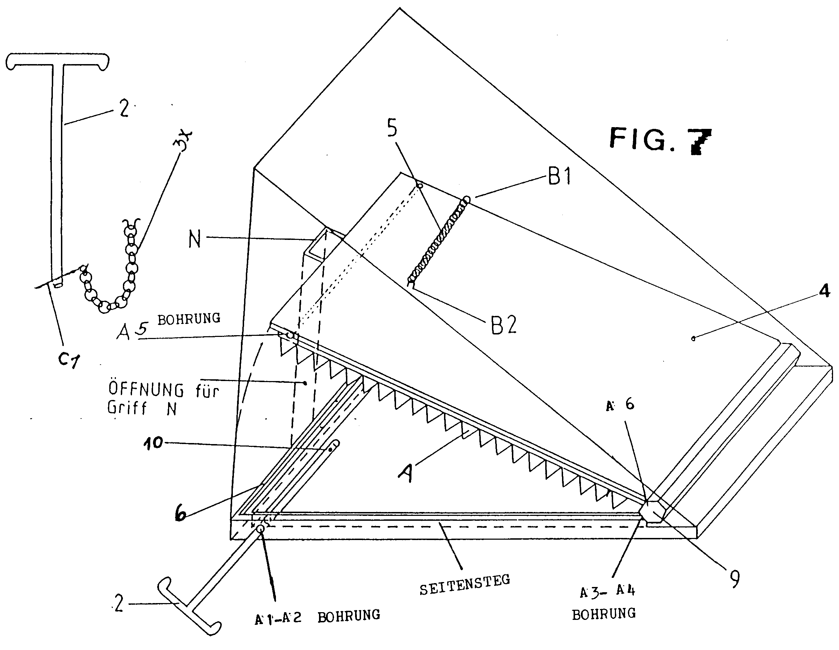

Diese Schwachstelle wurde erkannt, und einen Sicherheitsunterlegekeil konstruiert, der auch speziell für den Winter ausgerüstet ist. Der Sicherheitsunterlegkeil gemäß der Erfindung wird durch Anspruch 1 definiert und in Figuren 6 und 7 gezeigt. Vorteilhafte Ausführungen der Erfindung sind aus den Unteransprüchen zu entnehmen. Für die Bauart des Sicherheits-Unterlegekeils kommen alle zweckdienlichen Werkstoffe in Betracht wie Kunststoff, Metall, Titan- Metall, stahl u. hochwertiges Spezialgußeisen in gegossener bzw. geschweißter Ausführung, auch hochwertige Leichtmetalle bzw. Legierungen aus rostfreien Werkstoffen, oder feuerverzinkt vorgesehen.

Der Sicherheitsunterlegekeil wurde für schwere Kraftfahrzeuge in verschiedenen DIN NORMEN geformt vorgesehen, und für PKWs wurde der Sicherheits-Unterlegekeil in einer kleineren Dimension vorgesehen siehe DIN NORM TABELLE.

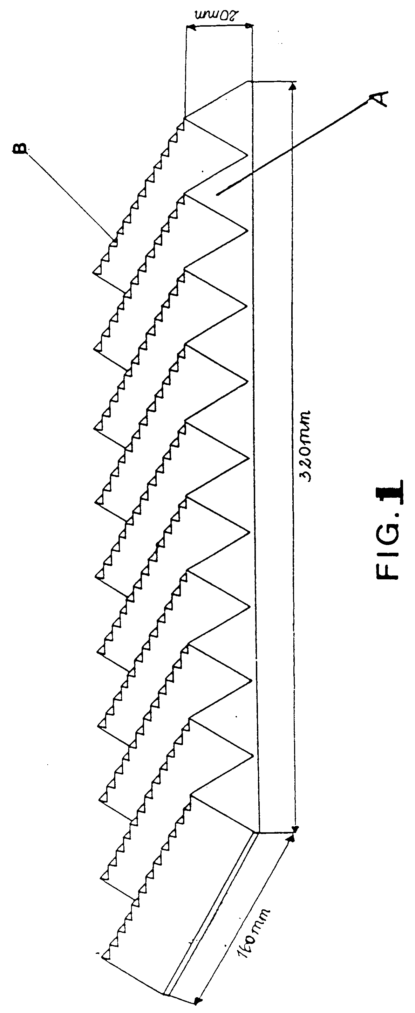

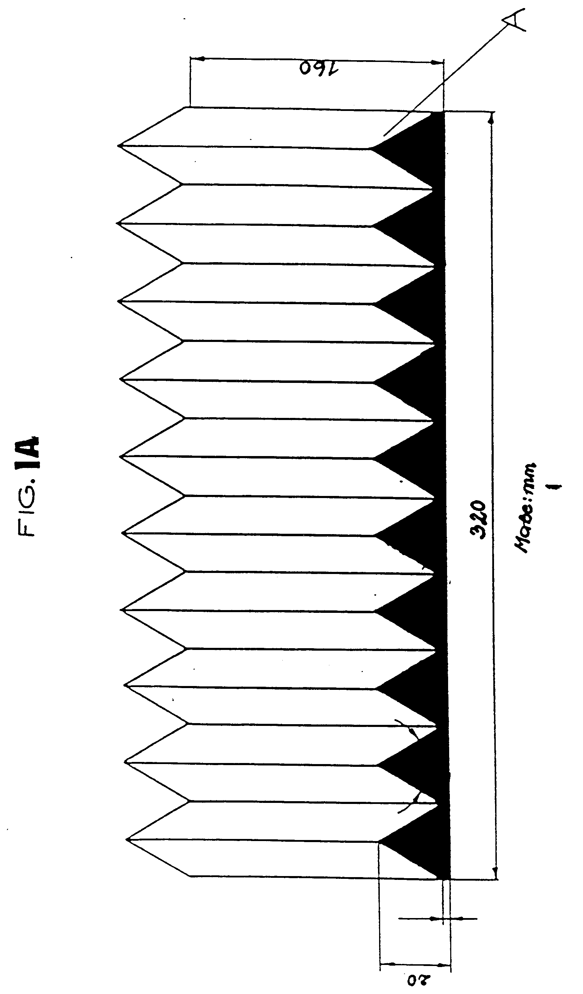

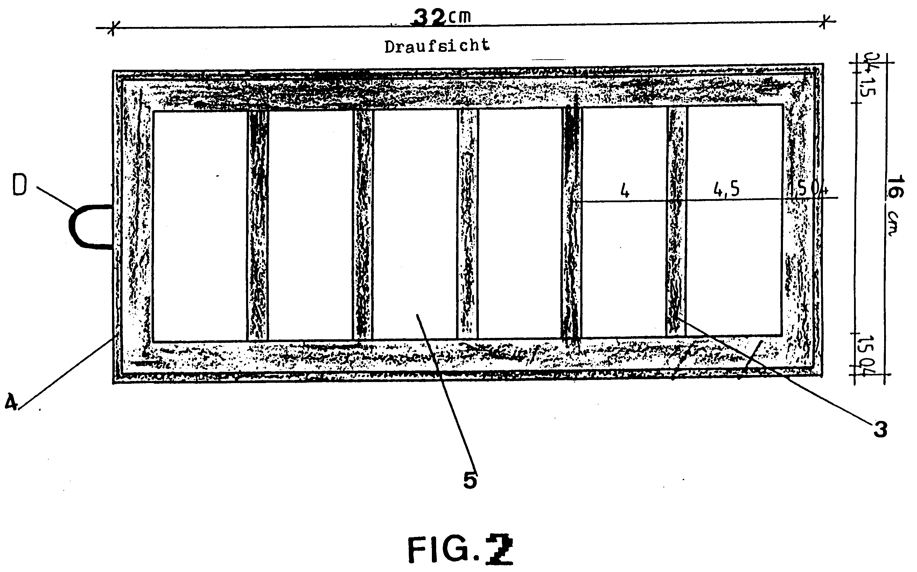

Die Gleitschutzplatte siehe Fig. 1 ist aus Stahl oder hochwertigen Spezialgußeisen, Tintan-Metall, oder aus hochwertigen Leichtmetall bzw. Legierung gegossen vorgesehen. Die Unterseite der Gleitschutzplatte siehe Bez. (A) ist mit 18- 20 mm hohen Gleitschutzrippen aus Stahl oder Metallguß mitgeformt vorgesehen. Werkmale: 1) an den Rippenkannten sind der Breite nach verlaufend Zacken mitgeformt siehe Bez. (B) Fig. 1
Fig. 2 (Beschreibung)

Die Zacken haben je eine Tiefe von 6mm, die Gleitschutzplatte wurde mit dem Oberteil aus Kunststoff, in einer Kunststoffspritzgußform mitgeformt angeordnet. Merkmale: 2) Der Kunststoffspritzguß füllt auch den vorgesehenen Leerraum bei der Oberfläche der Gleitschutzplatte,

Der Sicherheits-Unterlegekeil wurde für schwere Kraftfahrzeuge in verschiedenen DIN NORMEN geformt vorgesehen,und für PKWs wurde der Sicherheits-Unterlegekeil in einer kleineren Dimension vorgesehen siehe DIN NORM TABELLE.

| Nenngröße (bezogen auf den Radius des Reifens) | a ± 5 | b ± 5 | c ± 5 | h ± 5 | r | Radlast ¹) auf dem Keil kg max. | Regelfall statischer Reifenhalbmesser bis | für Reifen nach ²) | Gewicht kg |
|---|---|---|---|---|---|---|---|---|---|
| 380 | 160 | 100 | 120 | 150 | 360 | 1 500 | 380 | DIN 7803 | 1,000 |
| | | | | | | | | DIN 7804 | |
| | | | | | | | | DIN 7813 | |
| 480 | 200 | 120 | 160 | 190 | 460 | 3 500 | 480 | DIN 7793 | 4,000 |
| | | | | | | | | DIN 7804 | |
| | | | | | | | | DIN 7805 | |
| | | | | | | | | DIN 7813 | |
| 600 | 250 | 150 | 200 | 230 | 560 | 6 500 | 600 | DIN 7793 | 5,500 |
| | | | | | | | | DIN 7805 | |
| | | | | | | | | DIN 7813 | |

| | | | | | | | | | |
|---|---|---|---|---|---|---|---|---|---|
| ¹) Unter Radlast ist die halbe Achslast, bezogen auf die höchste Achslast des Fahrzeuges, zu verstehen, wobei Doppelbereifung als ein Rad gilt. | | | | | | | | | |
| ²) Die in der Tabelle angegebenen Maße des statischen Reifenhalbmessers sind als Richtwerte zu betrachten. In Grenzen bis + 5 % des statischen Reifenhalbmessers können Unterlegkeile auch für größere Reifen verwendet werden, wenn die Radlast nach der Tabelle nicht überschritten wird. | | | | | | | | | |

Die Höhe des Leerraumes zur Leiste wurde mit ca. 15mm vorgesehen. Merkmale: 3) auf der Gleitschutzplatte sind auf der Oberfläche auch Halterungsleisten mit der Gleitschutzplatte mitgegossen vorgesehen. Die Halterungsleisten haben eine Breite von 10mm, und einen Durchmesser von 3-4mm Stahl oder Metallguß. Von den Halterungsleisten zur Oberflächen-Abschlußkante der Gleitschutzplatte ist eine Höhe von ca. 5- 10mm vorgesehen. Merkmale: 4) diese vorgesehene Erhöhung der Seitenwände dient als Aufsaatzvorrichtung für die Kunststoffspritzgußform, die hier aufgesetzt vorgesehen wurde. Merkmale: 5) bei der Spritzgußformung wird der vorgesehene Hohlraum der Gleitschutzplatt mit den Halterungsleisten, mit Kunststoffspritzguß ausgefüllt. Merkmale: 6) dadurch haftet die Gleitschutzplatte nach Erhärten des Kunststoffes an den vorgesehenen Halterungsleisten fest.

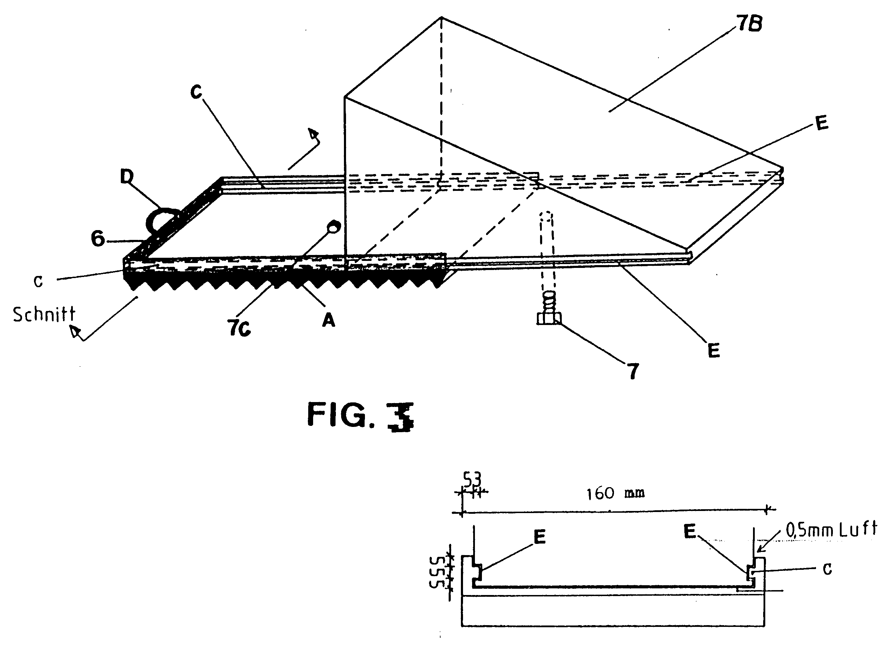

Weiters wurde auch eine Gleitschutzplatte aus Stahl oder Metallguß, auf dem Kunststoffsicherheitskeil (Oberteil) siehe Fig. 3 aufschiebbar vorgesehen. An den beiden Innenseiten der Gleitschutzplatte wurde je eine Einschiebleiste mit der Gleitschutzplatte mitgeformt vorgesehen siehe Bez. C (Fig. 3). Die Breite der Einschiebleiste wurde mit 9mm und die Höhe mit 10mm vorgesehen. Die Fig. 3 zeigt zeichnerisch dargestellt den Kunststoffkeiloberteil der auf die Gleitschutzplatte hinaufgeschoben wird. Daher wurden auch bei Kunststoffkeil-Oberteil Bez. 7B an den unteren Außenkannten Einschiebrinnen mitgeformt vorgesehen siehe Bez. E. Die Länge der Einschiebrinnen ist gleich mit der Länge des Kunststoffkeils, sowie auch mit der Länge der Einschiebleisten der Gleitschutzplatte angepaßt. Die Breite der Einschiebrinnen sind 10mm, und die Tiefe wurde imt 10mm, und die Höhe wurde mit 11mm vorgesehen. Merkmale: 7) weiters könnten auch verschiedene Arten von Sperrmechanismen bei der Gleitschutzplatte vorgesehen werden, die ein Herunterrutschen der aufgeschobenen Gleitschutzplatte verhindert. Es wurde einfachhalber nur eine Schraube an der vorgesehenen Bohrung Bez. 7C unterhalb der Gleitschutzplatte eingeschraubt, die somit den Kunststoffkeil-Oberteil befestigt.

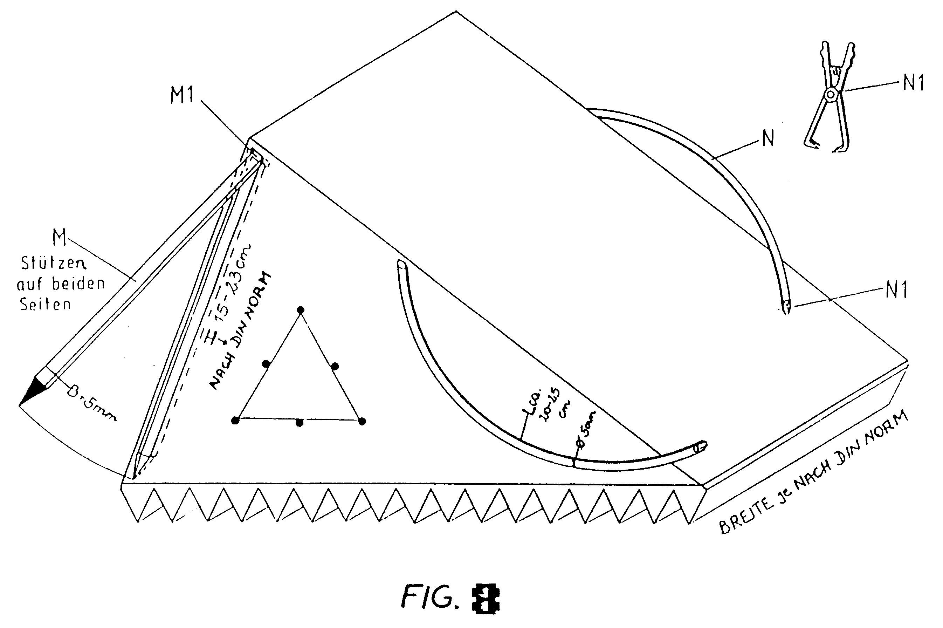

Merkmale: 8) weiters wurde bei der Gleitschutzplatte siehe Fig. 8A ein Schloß eingebaut vorgesehen, sowie bei der Unterlegekeilhalterungsvorrichtung am LKW wurde ein Sperrschlitz mit der Länge von 10mm, und einer Breite von 5mm vorgesehen. Der Sperrriegel rastet beim Zusperren in den dafür vorgesehenen Sperrschlitz ein siehe Merkmal: 9) und sichert somit den Sicherheitsunterlegekeil vor einem Diebstahl.

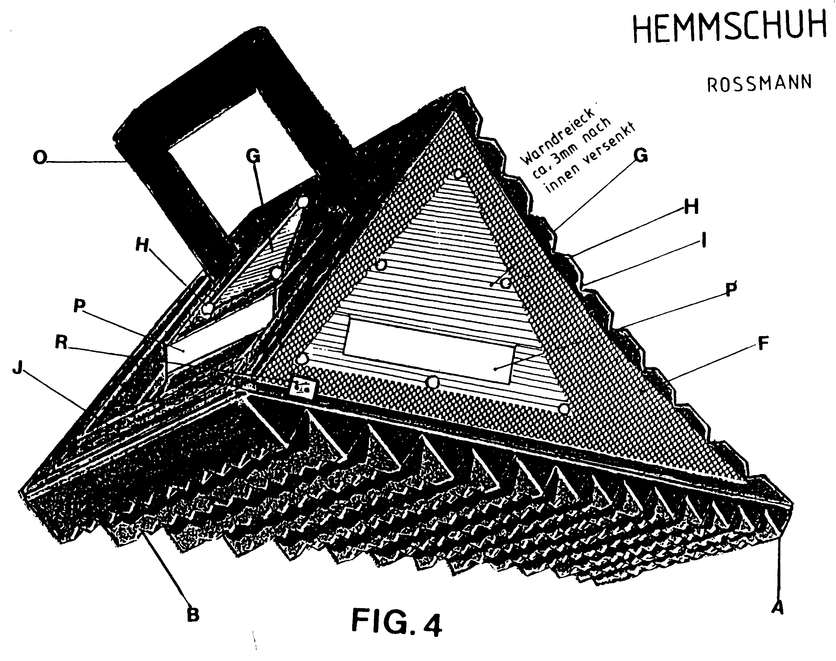

Bei der Gleitschutzplatte wurde auch ein Befestigungsbügel siehe Bez. D mitgeformt vorgesehen. Der Sicherheits-Unterlegekeil wurde auch mit einer silbernen Rückstrahlerbeschichtung aus Kunststoff oder Metallfolien reflektierenden Material, an beiden Seitenwänden und an der Stirnseite siehe Bez. F aufgeklebt vorgesehen. Weiters wurden in der jeweils vorgesehenen mitgeformten Vertiefung von 2-3mm in Form eines vollen Dreiecks auch die drei roten vollen Warndreiecke aus Kunststoffrückstrahlenden-Material mit je einer Ledanlage eingebaut vorgesehen. Das Bez. (G) Fig. 4 zeigt das rote Warndreieck eingeklebt vorgesehen, und Bez. (H) zeigt die vorgesehene Ledanlage mit den 6 orangen Blinkleuchten eingebaut vorgesehen. Die Ledanlage wird von 4 Batterien mit je 1,5 Volt gespeist.

Diese vorgesehenen Sicherheitseinrichtungen wie Rückstrahlerbeschichtung, Warndreiecks und Ledanlage, dienen zur besonderen Sicherheit bei abgestellten Lastkraftfahrzeug bei Dunkelheit und schlechter Sicht und Nebel. Da der Sicherheits-Unterlegekeil durch die vorgesehenen Sicherheitseinrichtungen auch das Kraftfahrzeug von seitwärts (links u. rechts) sowie auch von rückwärts optimal absichert, ist man mit diesem Sicherheits-Unterlegekeil eine Spur sicherer unterwegs. Merkmale 10) es wurde auch am Sicherheits-Unterlegekeil ein aus- und einklappbarer handgerechter Griff mit vorgesehener Fingerform angeordnet. Auf der Auflauffläche des Sicherhelts-Unterlegekeils siehe Bez. I (Fig.4) sind in der Querrichtung 1 cm vertieft Gleitschutzrippen mitgeformt vorgesehen. Beim Aufrollen des Reifens dringen die Gleitschutzrippen in das Reifenprofil ein, dadurch hat der Reifen am Sicherheitsunterlegekeil eine bessere Haftung.

Die Auflauffläche muß nach der Reifenformung bzw. nach den DIN NORMEN so ausgebildet sein, daß das Rad leicht aufrollt und sich zuverlässig anlegen kann, sodaß der Sicherheits-Unterlegekeil mit einem Teil des Fahrzeuggewichtes belastet und auf die Straße angedrückt wird. Die an der Unterseite der Gleitschutzplatte vorgesehene Gleitschutzrippen mit Stahlzacken dringen in die eisige Straßendecke ein, und verhindern somit ein wegrutschen des belasteten Sicherheitsunterlegekeils.

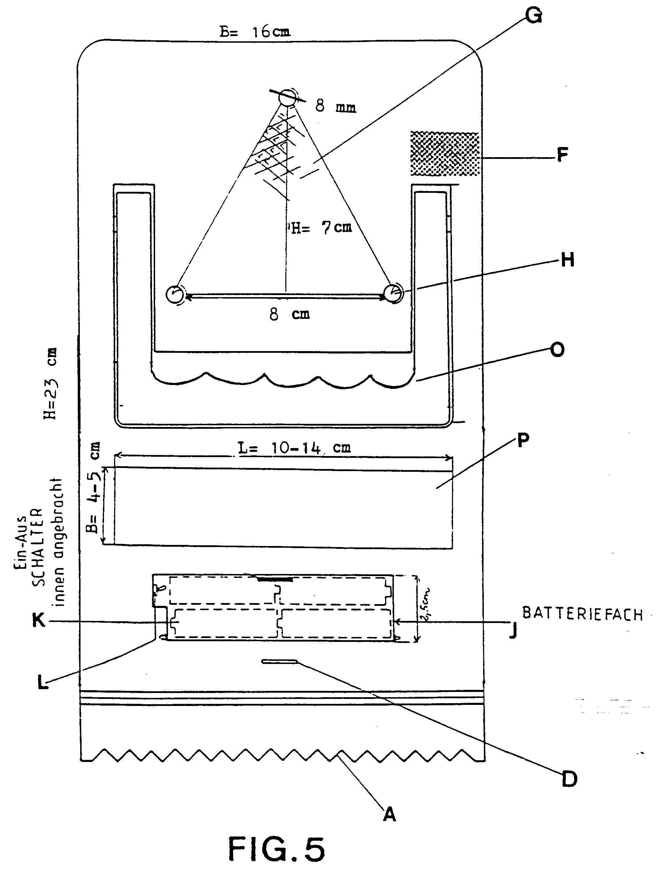

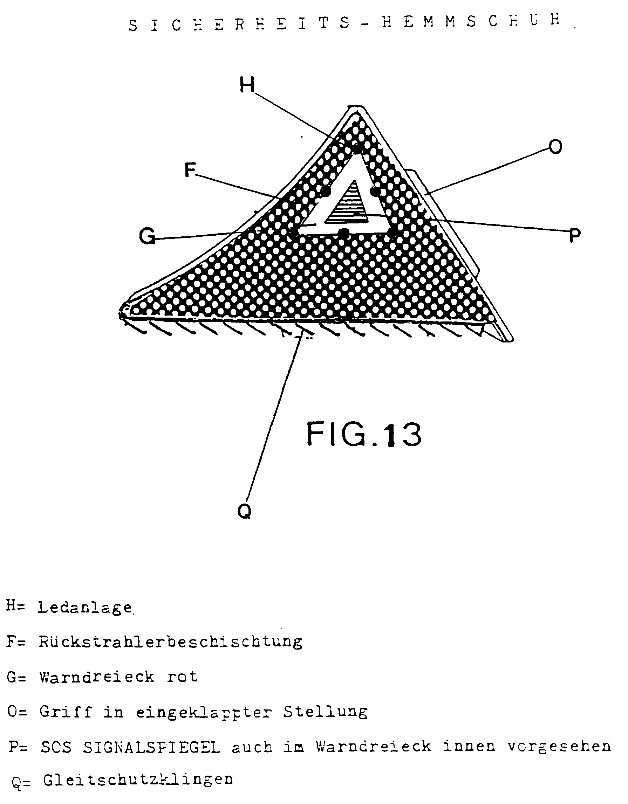

Das Bez. J Fig. 5 zeigt zeichnerisch dargestellt das vorgesehene Batteriefach mit verschließbaren Deckel, Bez. K zeigt die 4 Stk. eingelegten Batterien zu je 1,5 Volt (Mignonzellen oder Monozellen), Bez. L zeigt den EIN u. AUSSCHALTKNOPF. Weiters kann auch noch eventuell am Sicherheits-Unterlegekeil siehe Fig. 8 Bez. M ein Seitenständer links und rechts aus Kunststoff oder aus Leichtmetall einkappbar oder einschiebbar vorgesehen werden. Dieser Sicherheits-Unterlegekeil mit Seitenständer bzw. Stützarme eignet sich besonders bei weichen Untergrund, oder Unebenheiten im Gelände sowie bei Steigungen. Weiters wurden auch zwei Klemmarme einklappbar am Sicherheits-Unterlegekeil vorgesehen siehe Fig. 8 Bez. N. Merkmale: 11) vorne an den Sicherheitsklemmarmen sind Metallklemmen vorgesehen, die an der Felge sich festklammern siehe Bez. N1. Zweck dieser vorgesehenen Reifenklemmarme ist, daß der Sicherheitsunterlegekeil nicht vom Reifen wegrutschen kann. Denn leider wurde schon öfters erlebt, daß sich etwa bei einer leicht ansteigenden Schotterstraße bei unterspülten Untergrund durch starken Regen, oder Schneeschmelze (Tauwetter) usw. daß sich bei diesen Witterungseinflüssen hierbei einen abgestellten LKW sich der Bremsschuh bzw. Hemmschuh löste, und der vor dem Abrollen gesicherte LKW zu Tal donnerte. Bei der Konstruktion des Sicherheits-Unterlegekeils wurden einige Sicherheitsfaktoren eingebaut vorgesehen. Es wurde auch eine Gleitschutzplatte siehe Fig. 13 (Bez. Q) mit schrägen Gleitschutzklingen eingebaut bzw. mit dem Oberteil aus Kunsstoffspritzguß mitgeformt vorgesehen. Die Gleitschutzklingen sind aus rostfreien Metall bzw. Stahlguß vorgesehen, Maße: B=2mm H=2,2mm die Länge richtet sich je nach den verschiedenen vorgesehenen Dimensionen des Sicherheitskeils und wurde von 120 mm bis 200mm Länge vorgesehen.

Der Abstand von Gleitschutzklinge zu Gleitschutzklinge wurde mit 10mm angeordnet, die Gleitschutzklingen sind vorne auch etwas zugeschliffen vorgesehen. Diese Gleitschutzklingen können auch heizbar angeordnet werden. Weiters wurde auch am Sicherheits-Unterlegekeil bzw. beim eingebauten Warndreieck ein SOS SIGNALSPIEGEL siehe Bez. (P) Fig. 4, dieser dient optimal als Notutensile,da der SOS SIGNALSPIEGEL auch bei Tageslicht schon von einigen Kilometern zu sehen ist. Dieser vorgesehene SOS SIGNALSPIEGEL dient auch zur Absicherung des abgestellten Kraftfahrzeuges bei Tag, oder zur Hilfe herbeiholen bei Notfall.

Ausklappbarer Sicherheits-Unterlegekeil mit Stahlstiften und Gleitschutzrippen vorgesehen, die Maße richten sich nach den jeweiligen Dimensionen der Reifen. Die Unterseite des Sicherheits-Unterlegekeils ist zur Gänze mit 1,3cm langen Stahlstiften bestückt siehe Fig. 6 Bez. D1. Diese Stahlstifte sind mit der Gleitschutzplatte mitgeformt, oder könnten auch aufgeschraubt vorgesehen werden. Der Vorteil wäre, daß die verschleißten Stahlstifte auch auswechselbar sind. Die Gleitschutzplatte siehe Bez. 4 ist mit Stahlstiften bestückt und ist auch einklappbar vorgesehen, mit einer eingebauten Zugfeder siehe Bez. 5 wird die Gleitschutzplatte eingezogen. Die vorgesehene Zugfeder ist an zwei Halterungsbügel siehe Bez. B1 u. B2 eingehängt.

Merkmale: e) die Gleitschutzplatte ist auch mit einem Griff siehe Bez. N vorgesehen, f) an der Stirnseite des Sicherheitskeils wurde ein ca. 4cm breiter u. ca. ein 17cm hoher Griffschlitz für das Ein- u. Ausklappen der Gleitschutzplatte angeordnet, das Bez. 6 zeigt die Bodenplatte an den Seitensteg angeschweißt mit vorgesehenen Löchern, jedes Loch hat ca. einen Durchmesser von 6mm siehe Bez. 7 die Bodenplatte hat ca. eine Stärke 5-6mm, bei den vorgesenen Löchern ragen die Stahlstifte hindurch bei ausgeklappter Stellung ca. 8mm lang.Beim verstärkten Seitensteg der Grundplatte Bez. M2 wurden vier Bohrungen mit je einem ⌀ von ca. 10mm vorgesehen siehe Bez. A 1- A 4.

Bei der ausklappbaren Gleitschutzplatte wurden der Breite nach durchgehend 2 Bohrungen vorgesehen mit den Maßen ⌀= 10mm Tiefe= 160mm siehe Bez. A5, A6. Weiters wurde die einklappbare Gleitschutzplatte durch die Bohrung A6 eine Sechskanntschraube zum aus und Einklappen beweglich vorgesehen siehe Bez.9.

Zur Befestigung der Gleitschutzplatte in ausgeklappter Stellung wurde ein handgerechter Flügelbolzen durch die vorgesehenen Bohrungen durchgeschoben angeordnet siehe Bez. 2, Maße: L= 17cm ⌀= 2,5mm. Merkmale: i) an den Sicherheitsbolzen ist eine feine Kette mit ca. einer Länge von 10cm vorgesehen siehe Bez. (3X), wobei das Ende der Kette an der unteren Seitenwand des Sicherheits-Unterlegekeils angeschraubt vorgesehen wurde. Merkamale: i) beim Herausziehen des Flügelbolzens Bez. 2 zieht sich die Gleitschutzplatte mit Hilfe der vorgesehenen Zugfeder Bez. 5 automatisch ein.

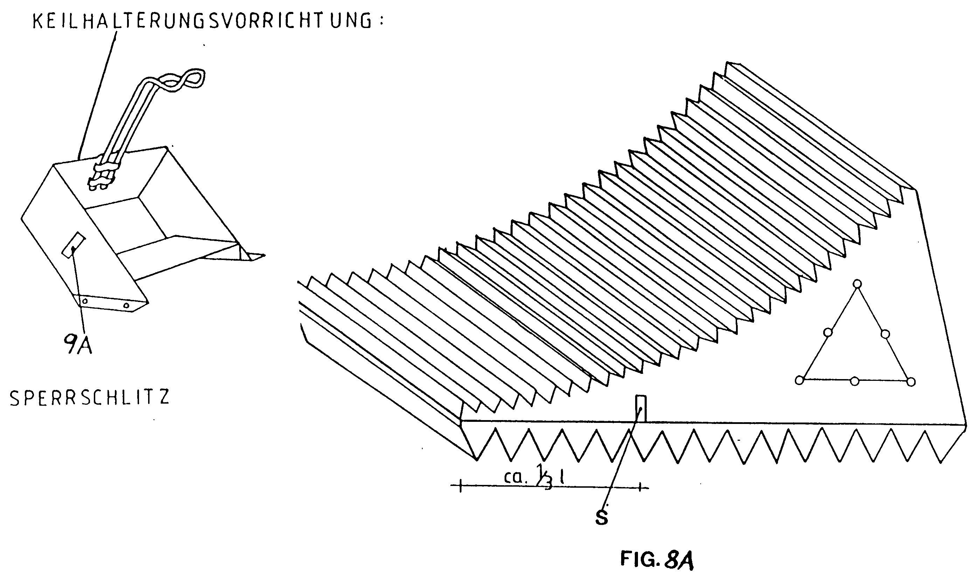

Zweck der erfindungsgemäßen einklappbaren Gleitschutzplatte mit vorgesehenen Stahlstiften ist, daß sich der Sicherheitskeil besser an den vorgesehenen Keilhalterungsvorrichtung am LKW anbringen läßt. Weiters wird auch eine eventuelle Verletzungsgefahr durch die einklappbaren Stahlstifte ausgeschaltet. Für den PKW ist der Sicherheits-Unterlegekeil in einer kleineren Dimension vorgesehen, und verpackt in einer Keilbox bzw. Hemmschuhbox aus Holz, Blech oder Kunststoff vorgesehen. Durch diese vorgesehene Keilbox ist der Sicherheits-Unterlegekeil handlicher und kratzsicher im Kofferraum zum Mitführen geeignet, siehe Fig. 9. Die Keilbox ist aus zwei Teilen zusammenschiebbar angeordnet, Maße: L= 34cm, B= 17cm und die Höhe ist ca. mit 20cm vorgesehen.

Sicherheits-Unterlegekeil Fig. 7 gemäß der Erfindung, dieser Sicherheits-Unterlegekeil ist mit einer einklappbaren Gleitschutzplatte mit vorgesehenen Gleitschutzrippen angeordnet siehe Bez. A. Die Gleitschutzrippen sind mit der Gleitschutzplatte mitgeformt vorgesehen, weiters sind an der Rippenkante verlaufend Stahlzacken bzw. Metallzacken mitgeformt vorgesehen siehe Bez. B. Diese Stahlzacken dringen in die eisige sowie trockene Asphaltdecke ein, und geben somit optimale Haftung für den belasteten Sicherheits-Unterlegekeil. Die Stahlzacken sind ca. mit einer Länge von 4-5mm mitgeformt vorgesehen, die Gleitschutzrippen sind mit den Maßen: Höhe= ca. 2cm, Breite= 16cm (Bez.A). Merkmal:k) die Gleitschutzplatte ist auch einklappbar, und zieht sich mit Hilfe der eingebauten Zugfeder ein. Bei der Gleitschutzplatte wurden zwei Bohrungen mit einem ⌀ von 10mm und durch die gesamte Breite durchgehend durchgebohrt angeordnet siehe Bez. A 5 u. A 6. Und an den verstärkten Seiten-stegen von 5-7mm ⌀ wurden vier Bohrungen siehe Bez. A1-A2 u. A3-A4 vorgesehen. Weiters wurde bei der Gleitschutzplatte durch die Bohrung Bez. A6 eine Sechskantschraube zum aus- u. einklappen der Gleitschutzplatte beweglich vorgesehen siehe Bez.9 (Maße: = Länge: 16,5cm, ⌀= 9mm). Zur Befestigung der Gleitschutzplatte in ausgeklappter Stellung wurden in den vorgesehenen Bohrungen A1 - A2 und A 5 ein Flügelbolzen durchgeschoben vorgesehen siehe Bez. 2 Fig. 7, auch mit Sicherungsbolzen wie bei Fig. 6 + Kette siehe Bez. C1 u. 3X.

Die Auflauffläche des Sicherheits-Unterlegekeils wurde in drei Modellen angeordnet, in Gleitschutzrillen ca. 7mm vertieft mitgeformt mit je einem Abstand von ca. 15mm siehe Fig. 10 (Bez. I), Fig. 11 (Bez. I1) zeigt die Auflauffläche mit Rippen vertieft ca. 10mm mitgeformt vorgesehen. Die Fig. 12 (Bez. I2) zeigt die Auflauffläche mit mitgeformten Noppen Maße: Höhe ca. 3-4mm und mit einem ⌀ von 5mm vorgesehen.

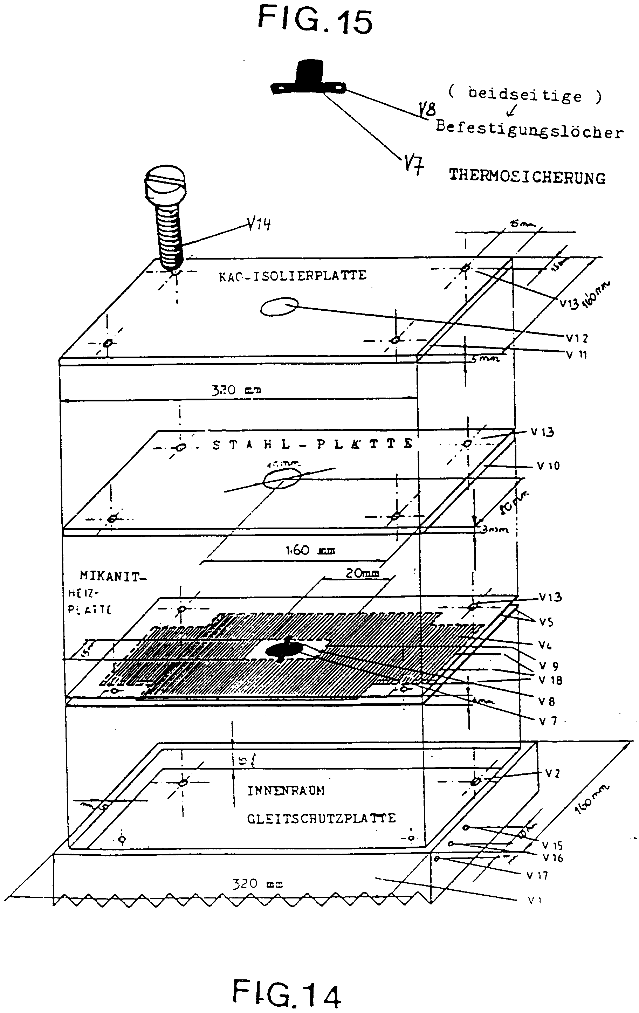

Als zusätzlicher Sicherheitsfaktor wurde bei der Gleitschutzplatte Fig. 14 Bez. (V1) innen im vorgesehenen Hohlraum eine Heizung angeordnet. Bei der Gleitschutzplatte innen siehe Bez.(V2) sind vier Schraubgewinde für die Befestigung des Mikanitheizkörpers mit den Maßen: L0 320mm, B= 160mm, H= 4mm, sowie für die Befestigung einer rostfreien Stahlplatte und einer Kaoplatte vorgesehen.

Der Mikanitheizkörper besteht aus einer unteren Mikanitplatte Bez. V5 mit ca. 1mm Stärke. Über die untere Mekanitplatte mit den Maßen; L= 320mm, B= 160mm, H= 2mm wurde auch eine obere Mikanitisolationsplatte mit den selben Maßen darüber gelegt angeordnet. Bei den Mikanitplatten wurde je ein Ausschnitt in der Mitte siehe Bez. (V9) für den Einbau des einpoligen Thermostats vorgesehen siehe Bez. (V7). Die Thermosicherung schaltet sich bei 60 Grad aus, seitlich sind zwei Halterungsspangen mit den Maßen: L= 7mm, B= 5mm, Stärke= 1mm siehe (Bez.V8) angeordnet.

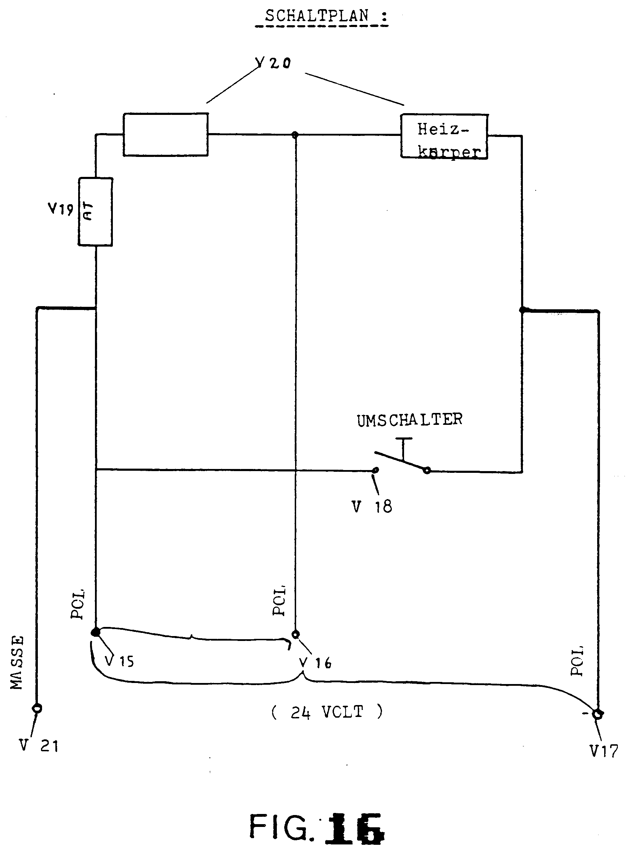

Die Mikanitheizkörper-Leistung bwz. Spannung wurde mit ca. 140-170 Watt berechnet, und mit einer 16 AT Sicherung siehe Bez. (V 19) Fig. 16 Schaltplan zeichnerisch dagestellt. Über dem bereits eingelegten Mikanitheizkörper mit 2 Mikanitplatten, wurde eine rostfreie Stahlplatte mit den Maßen: L= 320mm, B= 160mm, H= 3mm siehe Bez. (V 10) angeordnet: Weiters wurde über die Stahlplatte eine Kaoplatte mit den Maßen: L= 320mm, B= 160mm, H= 5mm siehe Bez. (V 11) vorgesehen, diese dient zur Temperatur Isolation. Die Stahlplatte sowie die Kaoplatte siehe Bez. (V 12) wurden je mit einer runden Öffnung für den Einbau des Thermostats angeordnet, der Durchmesser der Öffnung für den Einbau des Thermostats angeordnet, der Durchmesser der Öffnung wurde mit 15 mm vorgesehen. Nach dem Einlegen der angeführten Platten werden alle vier Platten an den dafür vorgesehenen Bohrungen siehe Bez. (V 13), mit je einer Schraube mit den Maßen: L= 21mm ⌀= 3mm befestigt.

Fig. 15 zeigt den Schaltplan mit den vorgesehenen Umschalter Bez. (V 18), mit dieser vorgesehenen Einrichtung kann der Sicherheits-Unterlegekeil auch bei 12 Volt u. 24 Volt angeschlossen werden, Bez. (V 19) zeigt die vorgesehene Sicherung mit 16 AT, Bez. (V 20) zeigt den Heizkörper, und Bez.(V 21) ist auf Masse geschaltet. Der Strom für die Gleitschutzplattenheizung wird von der Autobatterie gespeist, und wird mit Hilfe eines Anschlußkabels von ca. 4m Länge von einer vorgesehenen Stromanschlußbüchse zum Sicherheits-Unterlegekeils geleitet.

Weiters könnte auch die vorgesehene Ledanlage, oder Leuchtband hier angeschlossen werden. Fig. 15 zeigt die Thermosicherung zeichnerisch dargestellt mit den Maßen: ⌀= 14mm, H= 5mm, mit Halterungsbügel.

Der SOS SIGNAL-SPIEGEL wurde in Form eines Rechtecks an drei Seiten des Sicherheits-Hemmschuhs vorgesehen, siehe Fig. 5 Maße: Länge ist ca. 10-14cm, Breite ca. 4-5cm. Der SOS SIGNAL-SPIEGEL wurde auch im Warndreieck im Form eines Rechtecks und in Form eines Dreiecks vorgesehen, siehe Fig. 4 und Fig. 13.

Es wurden überall nur Grundmaße angegeben, denn die Maße:Länge Breite ,und Höhe des Sicherheits-Hemmschuhs und die Maße des Warndreiecks, SOS SIGNAL-SPIEGELS;Seitenständer, Sicherheitskeilhalterungsgurt bzw. Sicherheits-Hemmschuhhalterungsarme richtet sich je nach der DIN NORM des Hemmschuhs.
Fig. 1 zeigt eine Gleitschutzplatte
   A = Gleitschutzrippen
   B = Gleitschutzzacken (Draufsicht) Maße je nach DIN NORM
Fig. 1 A zeigt eine Gleitschutzplatte nur mit den Gleitschutzrippen Bez. A vorgesehen.
Fig. 2 zeigt eine Gleitschutzplatte die auf dem Oberteil aus Kunststoff aufgespritzt vorgesehen wurde.
   Bez. 3 Halterungsleisten
   " 4 Seitenwand, Bez. 5 Hohlraum, Bez. D Befestigungsbügel.
Fig. 3 zeigt einen Hemmschuh-Oberteil auf die Gleitschutzplatte aufschiebbar vorgesehen.
   Bez. A Gleitschutzrippen, Bez. 7B Hemmschuh-Oberteil, Bez. E Einschiebrinnen, Bez. C zeigt die Einschiebleisten, Bez. 7C Bohrung, Bez. 7 Schraube, Bez. D Befestigungsbügel , Bez. 6 Seitenwand.
Fig. 4 zeigt einen Sicherheits-Hemmschuh mit den eingebauten Sicherheitsfaktoren. Bez. A u. B zeigen die Gleitschutzplatte mit Gleitschutzrippen und Gleitschutzzacken auch heizbar vorgesehen. Bez. F Rückstrahlerbeschichtung, Bez. G Warndreieck, Bez. H Ledanlage, Bez. I Gleitschutzrillen der Auflauffläche, Bez. J Batteriefach, Bez. K Batterien, Bez. L Ein u. Ausschalter Bez. O Griff, Bez. P SOS SIGNALAPIEGEL, Bez. R Stromanschlußbüchse für 12 u. 24 Volt.
Fig. 5 siehe Bezugszeichenerklärung Fig. 4)
Fig.6 zeigt den HEMMSCHUH gemäß der Erfindung mit einklappbarer Gleitschutzplatte mit Gleitschutzstiften bestückt. Bez. 4 zeigt die einklappbare Gleitschutzplatte, Bez. B1 u. B2 Befestigungshaken, Bez. 5 Zugfeder, Bez. N Griff bei der Gleitschutzplatte, Bez. D1 Gleitschutzstifte, Bez. M2 Grundplatte, Bez. 7 Löcher, Bez. 6 Seitensteg, Bez. A 1-A 2 Bohrung, Bez. A 3-4 Bohrung, Bez. A5 u. A6 Bohrung bei der Gleitschutzplatte, Bez. 9 Sechskantschraube, Bez. 2 Flügelbolzen, Bez. 10 Bohrung beim Flügelbolzen, Bez. C1 Sicherheitsbolzen, Bez. 3X Kette.
Fig. 7 (siehe Bezugszeichenerklärung Fig. 6)
Fig. 8 zeigt einen HEMMSCHUH mit den vorgesehenen 2 Seitenständer und mit den beiden Sicherheitskeilhalterungsarme bzw. Hemmschuhhalterungsgurten. Bez. N1 KLEMMEN, Bez. M1 Scharnier einklappbar mit Feder, Bez. M Seitenständer bzw. Stützen, Bez. N zeigt die beiden Sicherheits-Hemmschuhhalter mit KLEMMEN .
Fig. 8A zeigt einen Sicherheits-Hemmschuh mit den vorgesehenen Schloss siehe Bez. S, Bez. 9A zeigt bei der Keilhalterungsvorrichtung einen Sperrschlitz, in den der Sperrriegel beim Zusperren einrastet und den HEMMSCHUH vor einem Diebstahl sichert.
Fig. 9 zeigt eine HEMMSCHUHBOX zusammenschiebbar vorgesehen.

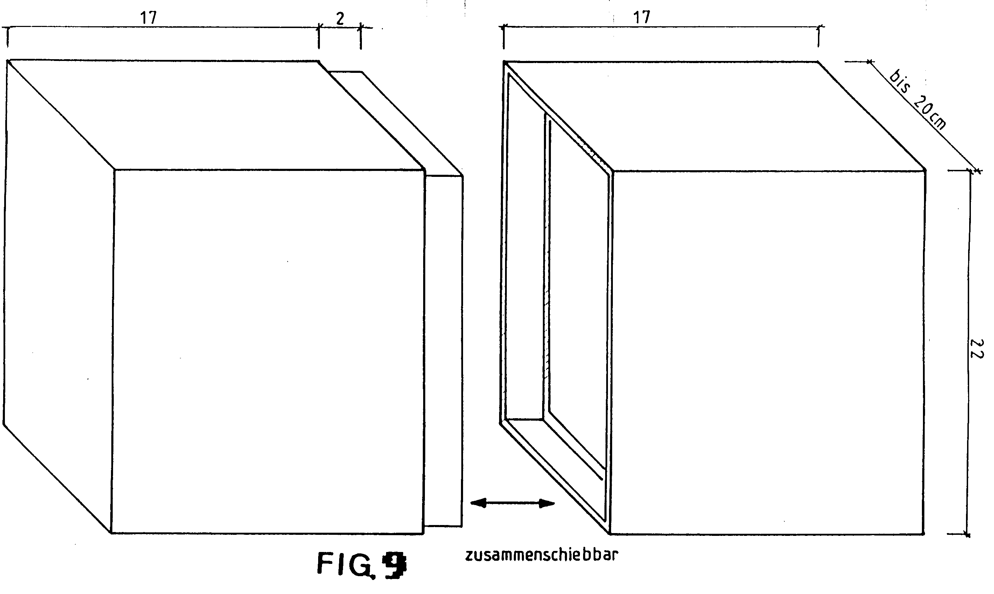

Fig. 10 Bez. I zeigt eine HEMMSCHUH-Auflauffläche mit mitgeformten Gleitschutzrillen.

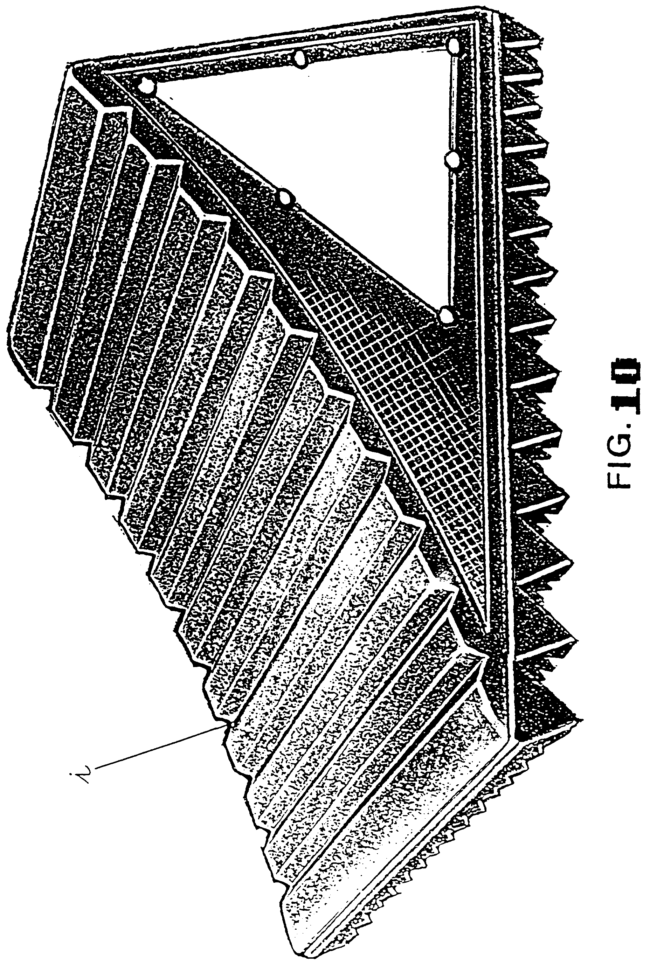

Fig. 11 Bez. I 1 zeigt eine Auflauffläche mit Gleitschutzrippen.

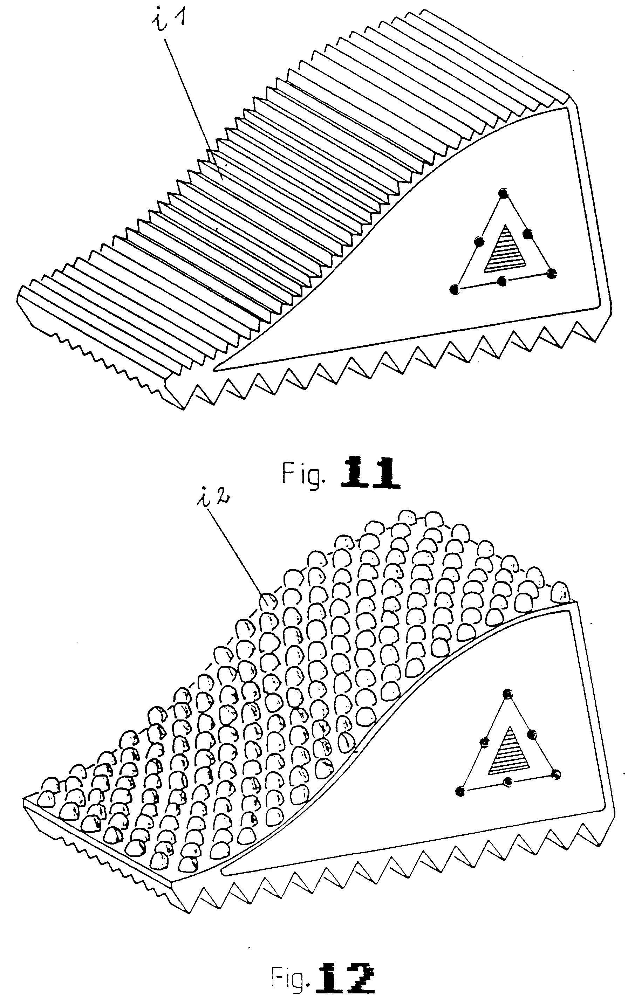

Fig. 12 Bez. I 2 zeigt eine Auflauffläche mit Gleitschutznoppen mitgeformt.
Fig. 13 Bez. Q zeigt einen HEMMSCHUH mit Gleitschutzklingen schräg verlaufend mitgeformt vorgesehen.
Fig. 14 zeigt eine Gleitschutzplatte mit eingebauter Heizung. Bez. V1 Gleitschutzplatte mit Heizung, V2 Schraubgewinde, V4 Heizdraht bzw. Heizband, V5 Mikanitplatte, V7 Thermosicherung V8 Halterungsspangen, V9 Ausschnitt, V10 Stahlplatte, V11 Kaoplatte, V12 (runde Öffnung), V13 Bohrung, V14 Schraube V15 - V16 = 12 Volt Anschluß, V15 - V17 = 24 Volt Anschluß V18 ist Umschalter, V19 Sicherung, V20 Heizkörper, V21 Masse.
Fig. 16 zeigt einen Schaltplan.
Fig. 15 zeigt einen Thermostat Bez. V7 mit den Halterungsbügel Bez. V8 links u. rechts mit vorgesehenen Bohrlöchern.

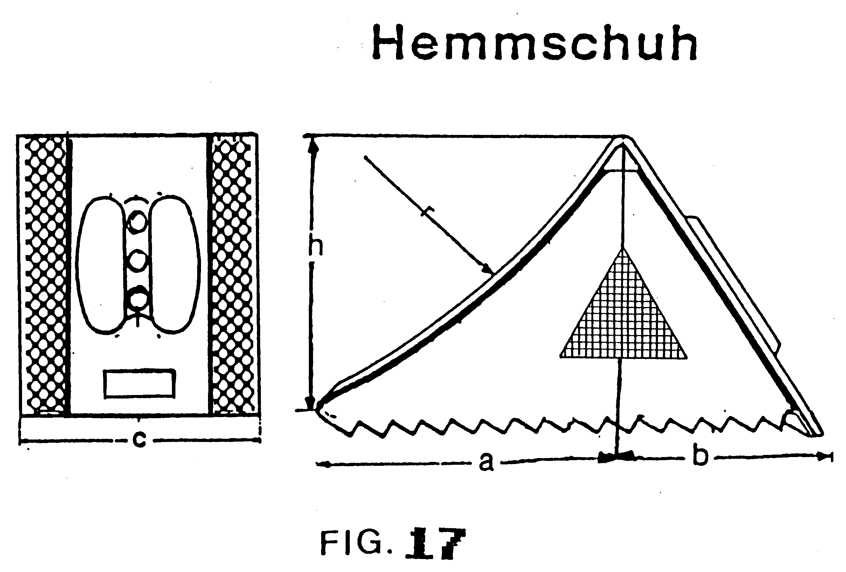

Weiters sind noch einige verschiedene Sicherheitsfaktoren am Sicherheits-Unterlegekeil vorgesehen. Die Fig. 18 zeigt einen Sicherheits-Unterlegekeil von der Seitenansicht zeichnerisch dargestellt, Bez. 1 zeigt eine Gleitschutzplatte mit Stahlstifte bestückt vorgesehen. Die Stahlstifte sind ca. mit einer Länge von 5-10mm vorgesehen, diese Gleitschutzstifte können auch mit einem vorgesehenen Gewinde aufschraubbar angeordnet werden. Dadurch wären die verschleißten Stahlstifte auch auswechselbar, oder die Gleitschutzstifte wurden mit der Gleitschutzplatte mitgeformt, oder aufgeschweißt, oder ein u. ausklappbar vorgesehen.

Die Stahlstifte bewirken bei eisiger sowie rutschiger ansteigender Fahrbahn, ein Abrollen des abgestellten LKWs oder PKWs. Beim Benützen des Sicherheits-Unterlegekeils dringen die Stahlstifte in die eisige Straßendecke ein und verhindern somit ein Wehrutschen des belasteten Sicherheits-Unterlegekeils.

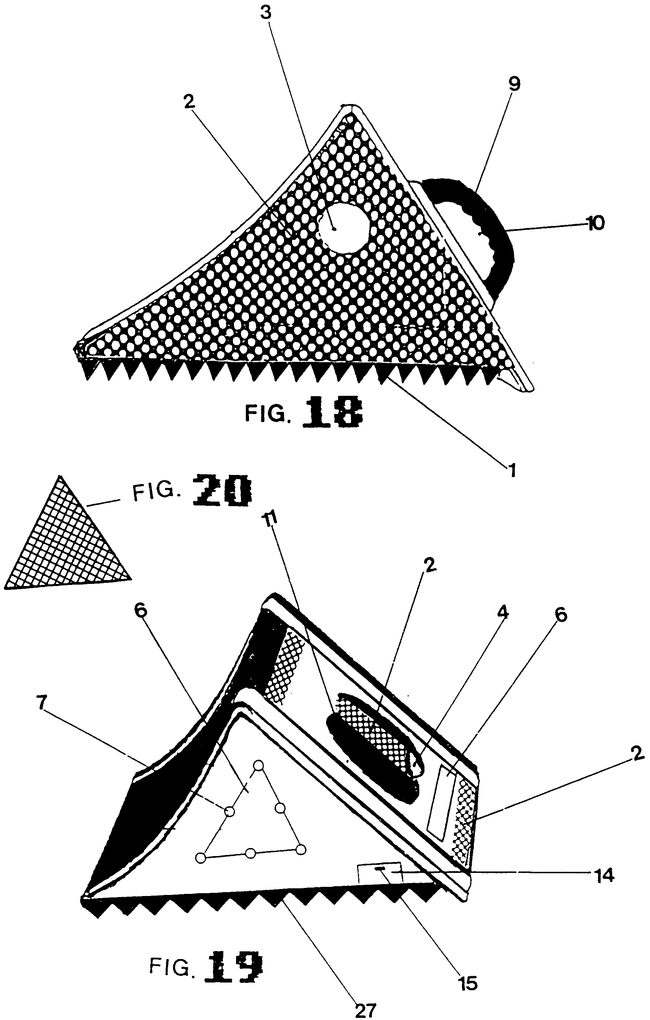

Das Bez. 2 zeigt an den beiden Seitenwänden des Sicherheitsunterlegekeils eine Rückstrahlerbeschichtung, sowie an der Stirnseite und am Haltergriff aufgeschraubte oder aufgeklebte Rückstrahler aus verschiedenen Ausführungsformen und Materialarten von Rückstrahlern wie Kunststoff und Rückstrahlerfolien auch in verschiedenen Farben wie gelb, rot, weiß, orange vorgesehen. Am Haltergriff siehe Fig. 21 wurden 3 runde Rückstrahler siehe Bez. 5 mit einem ⌀ von ca. 10-15mm vorgesehen, und bei Fig. 19 wurde am Haltergriff Bez. 4 ein Rückstrahlerstreifen siehe Bez. 2 mit den Maßen: Länge ca. 10cm, Breite ca. 15-20mm vorgesehen.

Weiters wurden am Sicherheits-Unterlegekeil drei orange Warnblinkleuchten an den beiden Seitenwänden, sowie an der Stirnseite eingebaut vorgesehen (siehe Fig. 18 u. Fig. 21) und Warnblinkleuchten Bez. 3 mit einem ⌀ von ca. 20mm vorgesehen.

Zur zusätzlichen Sicherheit wurde auch am Sicherheitsunterlegekeil siehe Fig. 19 Bez. 6 ein dreieckiger SOS SIGNALSPIEGEL mit einer Seitenlänge von ca. 10cm an der Stirnseite sowie an den beiden Seitenwänden siehe Fig. 19 eingebaut vorgesehen.

Um den SOS SIGNALSPIEGEL wurde eine Ledanlage (Ledblinkleuchten orange) mit einem ⌀ von ca. 5-10mm eingebaut vorgesehen. Oder es könnte auch statt dem dreieckigen SOS SIGNALSPIEGEL ein rückstrahlendes Warndreieck mit den selben Maßen, mit einer Ledanlage oder mit Leuchtband rundherum, oder integriert vorgesehen werden. Die Fig. 19 (Bez.7) zeigt die vorgesehene Ledblinkleuchte. Die Rückstrahler sowie SOS SIGNALSPIEGEL können auch in verschiedenen Ausführungsformen am Sicherheits-Unterlegekeil angebracht bzw. eingebaut vorgesehen werden. Auch im SOS SIGNALSPIEGEL könnte ein Rückstrahler in verschiedenen Ausführungsformen eingebaut werden, oder auch im rückstrahlenden Warndreieck, oder Rückstrahler in verschiedenen Ausführungsformen könnte ein SOS SIGNALSPIEGEL integriert angeordnet werden, mit Ledanlage oder Leuchtband. Bei benützen des Sicherheits-Unterlegekeil vom LKW oder PKW Lenkers, mit den vorgesehenen Sicherheitseinrichtungen wie Rückstrahler, Rückstrahlerbeschichtung, Warndreieck, Ledanlage, Leuchtband, Warnblinkanlage, dienen zur besonderen Sicherheit bei abgestellten mehrspurigen Kraftfahrzeugen. Bei Dunkelheit und schlechter Sicht, und besonders bei Nebel bewirkt dieser Sicherheits-Unterlegekeil einen optimalen Sicherheitseffekt. Der vorgesehene SOS SIGNALSPIEGEL dient als Notutensilie, da der SOS SIGNALSPIEGEL auch bei Tageslicht für den Notfall als Rettungshilfe von kilometerweiten Entfernung zu sehen ist.

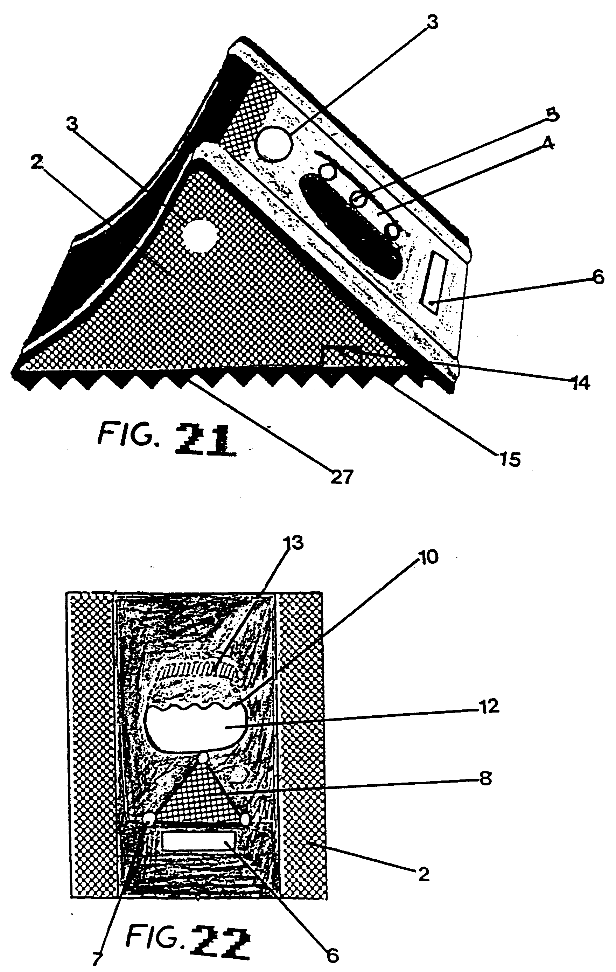

Am Sicherheits-Unterlegekeil wurden auch 3 Arten von Haltegriffen vorgesehen. Fig. 18 Bez.9 zeigt den Haltegriff in ausgeklappter Stellung mit handgerechter Fingerformung Bez. 10 Fig. 19 zeigt den Haltegriff auch an der Stirnseite eingearbeitet vorgesehen, dieser Haltegriff ist auch sehr handlich und hat auf beiden Seiten einen Schlitz siehe Bez. 11 damit der Haltegriff mit der Hand umfaßt werden kann. Fig. 22 zeigt einen Haltegriff mit einem handbreiten Hohlraum Bez. 12 mit den Maßen: Höhe ca. 4cm, Breite ca. 11cm, Tiefe ca. 8cm, am Ende des 8cm tiefen Hohlraums wurde nach oben ein 9cm breiter und 7cm tiefer Halterungsschlitz siehe Bez. 13 vorgesehen. Im Haltegriffschlitz in der Mitte kann auch eine Halterungsstange isoliert mit den ⌀ von 1cm und einer Länge von 11cm eingebaut vorgesehen werden.

Damit beim Herausziehen des untergelegten Sicherheits-Unterlegekeils ein noch besserer Halt mit den Fingern bewirkt wird.

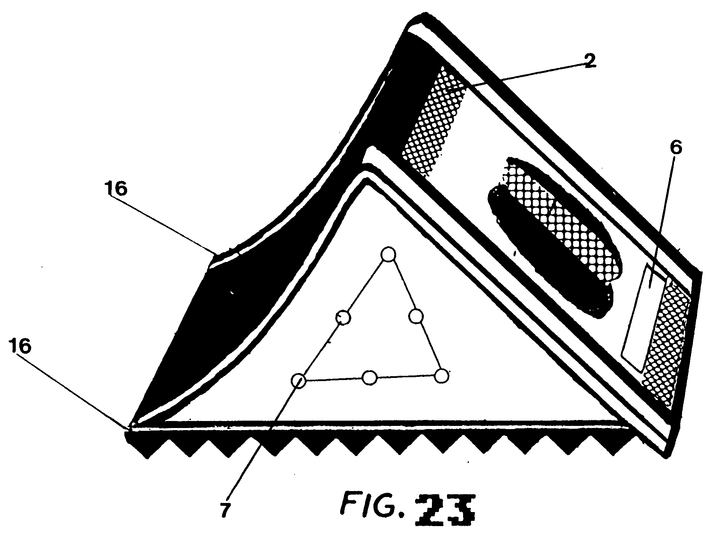

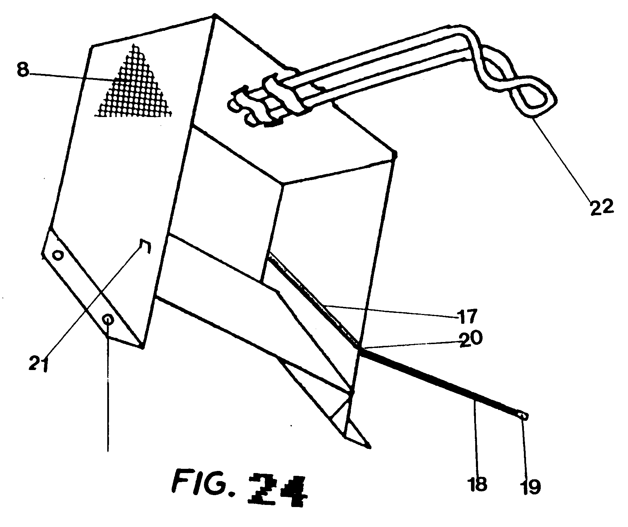

Weiters wurde auch ein Batteriefach siehe Bez. 14 vorgesehen , Bez. 15 zeigt den Batteriefachdeckelhalterungsknopf. Fig. 23 zeigt den Sicherheits-Unterlegekeil aufschiebbar angeordnet mit einer Einschiebrinne Bez. 16 bei der Gleitschutzplatte auf beiden Seiten mitgeformt vorgesehen. Maße der Einschiebrinne: Breite ca. 3-5mm, Tiefe ca. 5mm die Länge ist nach der DIN NORM des Sicherheits-Unterlegekeils von 26cm bis 35cm vorgesehen.

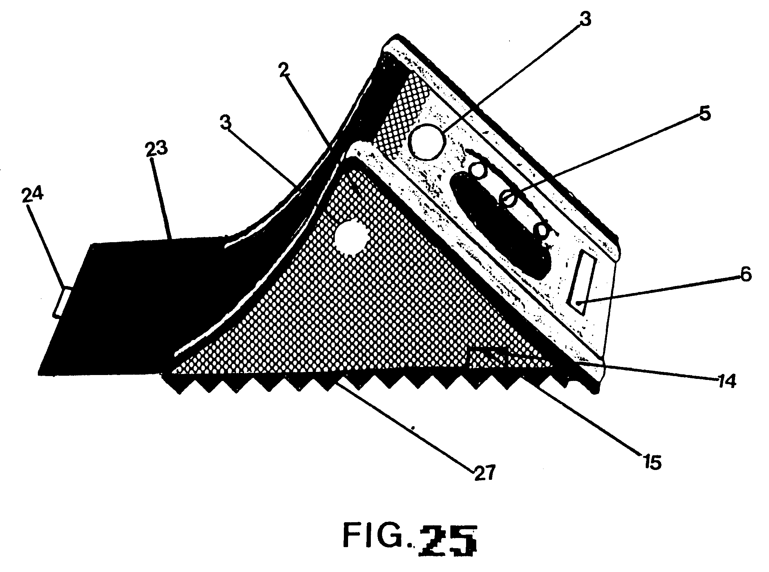

Bei der Keilhalterungsvorrichtung Fig. 24 wurden an beiden Innenseiten je eine Aufschiebleiste Bez. 17 vorgesehen, Maße: Länge ca. 35cm, Breite ca. 2,5mm - 4,5mm, Höhe ca. 4,5mm.

Somit kann der Sicherheits-Unterlegekeil mühelos in die Keilhalterungsvorrichtung eingeschoben werden. Zur Sicherung des Sicherheitskeils wurde ein Sperrbalken Bez. 20 beweglich vorgesehen. Der Sperrbalken mit der Öse rastet beim Versperren in die Sperrvorrichtung Bez. 21 ein, und wird mit Hilfe eines Vorhangschloßes versperrt. Es wurde auch noch zusätzlich ein Halterungsbügel vorgesehen siehe Bez. 22. Weiters wurde der Sicherheits-Unterlegekeil auch mit einer Auffahrthilfe aus verzinkten Alublech mit Gleitschutzrillen in der Gleitschutzplatte einziehbar mit Hängel Bez. 24 vorgesehen. Die Breite der Auffahrthilfe richtet sich je nach der DIN NORM, die Länge wurde ca. mit 10-15 cm vorgesehen, und Die Stärke ca. 2-3mm Alublech.

Die Auffahrthilfe könnte auch aus verschiedenen Werkstoffen wie Metall, Bleche, Aluguß rostfrei (verzinkt), Gummi, oder aus Kunststoff vorgesehen. Weiters wurden alle Arten von Gleitschutzprofilen an der Unterseite des Sicherheits-Unterlegekeils vorgesehen, die einen Gleitschutzeffekt bewirken. Diese Gleitschutzplatten können auch mit dem Unterlegekeil mitgeformt, aufschiebbar, aufschraubbar oder ein u. ausklappbar angeordnet werden. Die Gleitschutzplatten können aus verschiedenen rostfreien Werkstoffen verzinkt vorgesehen werden, wie Metall, Stahl Tintan-Metall, hochwertiges Spezialgußeisen in gegossener bzw. geschweißter Ausführung, oder hochwertige Legierungen, oder Präzisionskunststoff vorgesehen werden.

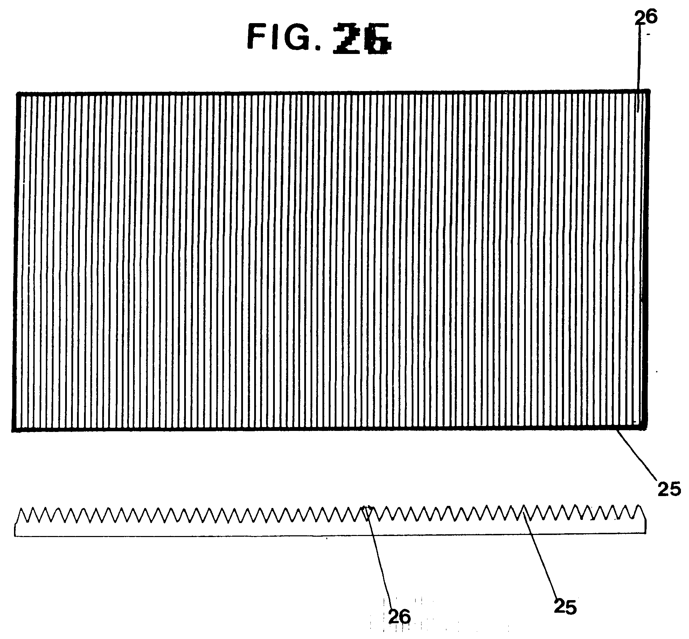

Die Figuren 26 - 38 zeigen verschiedene Arten von spezial gleitschutzfähigen Profilen die an der Unterseite des Sicherheits-Unterlegekeils vorgesehen wurden. Diese Gleitschutzplatten bewirken einen starken Sicherheitseffekt auf rutschigem und vereistem Straßenbelag. Weiters könnte auch in jede dieser Gleitschutzplatten eine Gleitschutzplattenheizung eingebaut vorgesehen werden. Diese Gleitschutzplattenheizung bewirkt auch im Winter bei Schnee und Eis einen optimalen sicheren Halt, da der Schnee und das Eis in minutenschnelle von der Asphaltdecke bzw. von dem Straßenbelag schmilzt. Die Maße der Gleitschutzplatten richtet sich je nach der DIN NORM des Sicherheitskeils, Breite von ca. 12cm - 20 cm, Länge von 26cm - 40cm, Höhe ca. 2,5cm - 3 cm bei vorgesehener eingebauten Gleitschutzplattenheizung.

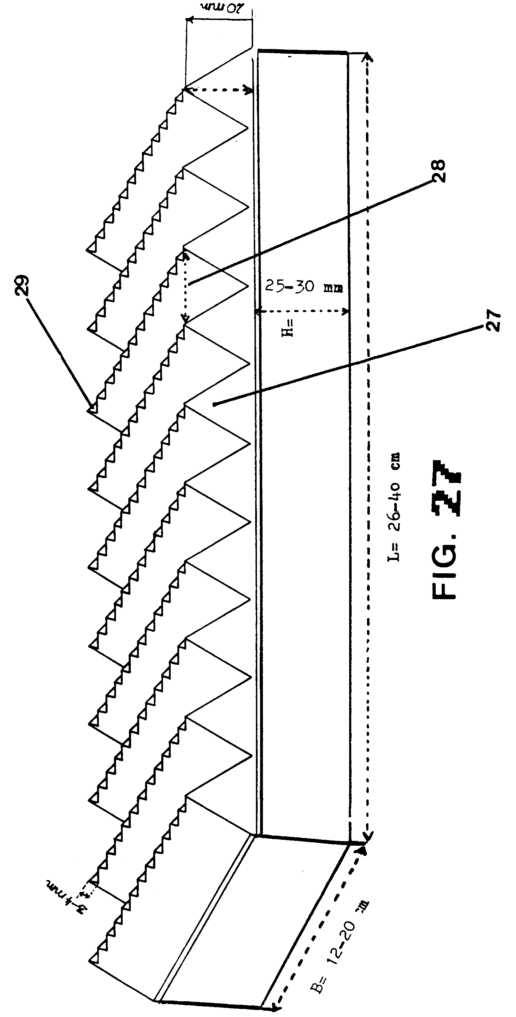

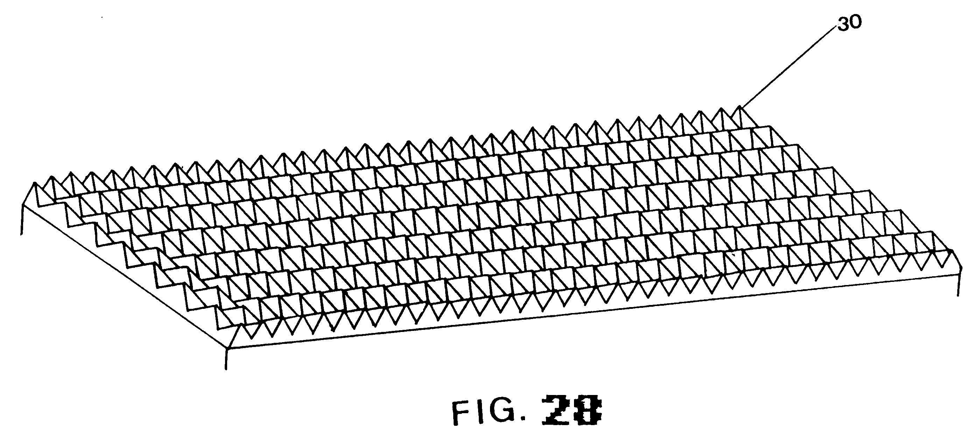

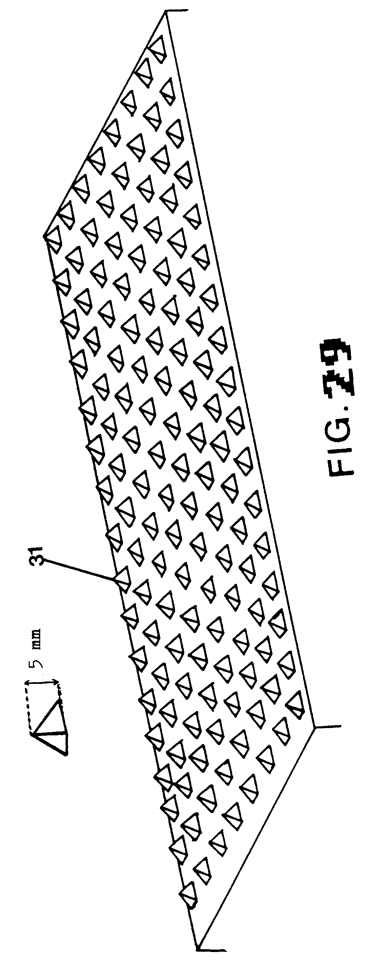

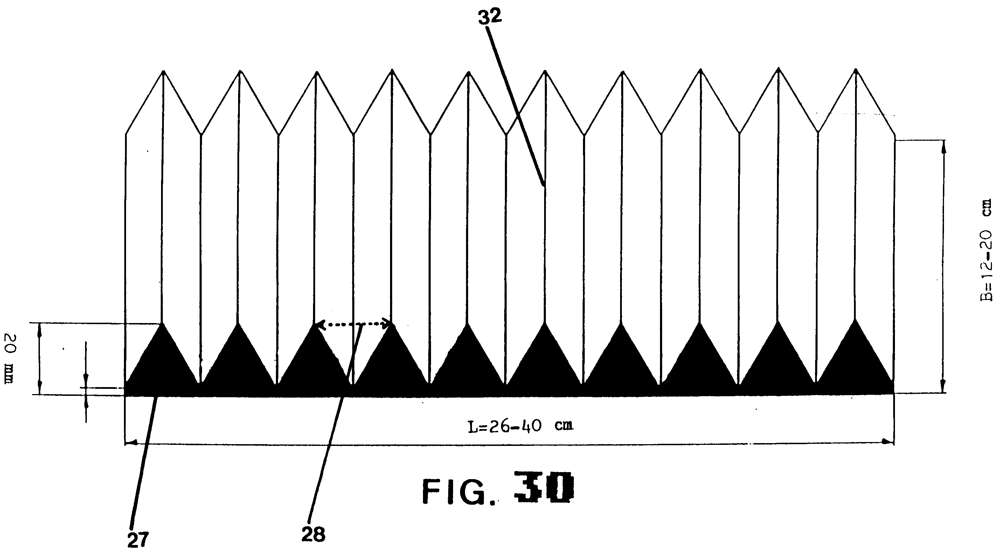

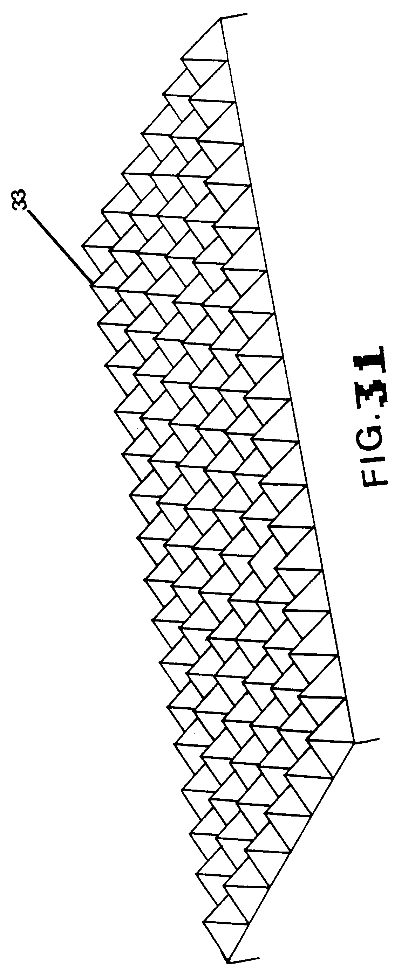

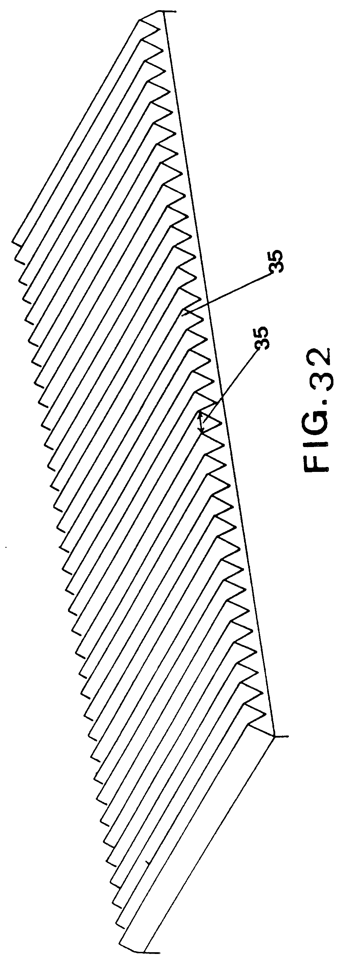

Alle diese Gleitschutzprofilarten können auch mit der Gleitschutzplatte mitgeformt, oder eingefräste, oder aufgeschweißt vorgesehen werden. Die Fig. 26 zeigt ein Gleitschutzprofil mit scharfkantigen Rillen Bez. 25, Maße: Breite 1mm, Höhe 3-4mm, der Abstand von Rille zu Rille Bez. 26 wurde mit ca. 2-3mm vorgesehen. Fig. 27 zeigt die Gleitschutzplatte mit 17 mm hohen Rippen Bez. 27, die Rippen wurden ca mit einem Abstand Bez. 28 von 20 mm vorgesehen, an der Rippenkante entlang sind Gleitschutzzacken mit der Höhe von 3-4mm mitgeformt vorgesehen siehe Bez. 29. Die Fig. 28 zeigt die Gleitschutzplatte mit bestückten Spitzkanten Bez. 30, mit der Höhe von ca. 5mm. Fig. 29 zeigt die Gleitschutzplatte mit dreieckigen Spitzkanten Bez. 31 bestückt vorgesehen, mit der Höhe von ca. 3-5mm und mit einem ⌀ von 5mm. Die Fig. 30 zeigt die Gleitschutzplatte mit 17mm hohen Rippenkanten Bez. 27, der Abstand von Rippen zu Rippe wurde mit 20mm angeordnet. Dei Rippen sind an der Spitze mit scharfen Kanten Bez. 32 vorgesehen. Fig. 31 zeigt die Gleitschutzplatte mit einem pyramidenförmigen Profil Bez. 33 vorgesehen, die Höhe je Pyramide wurde mit ca. 5-10mm, und mit dem ⌀ von ca. 10mm angeordnet.Fig. 32 zeigt die Gleitschutzplatte mit 5-7mm hohen Gleitschutzkanten Bez. 34, der Abstand, Bez. 35 von Kante zu Kante wurde mit ca. 5mm angeordnet.

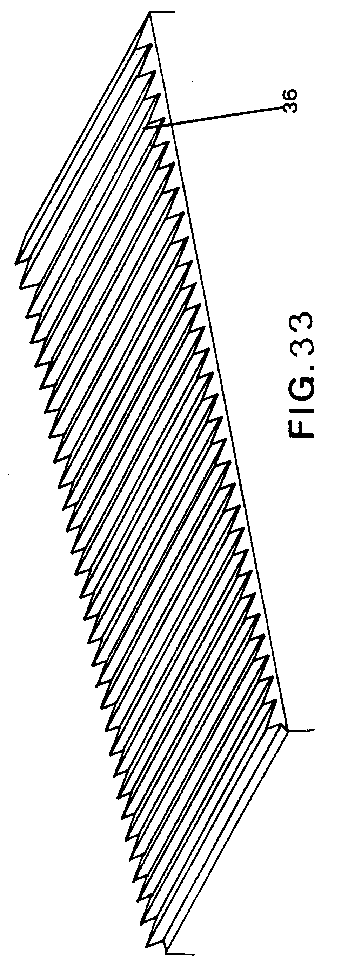

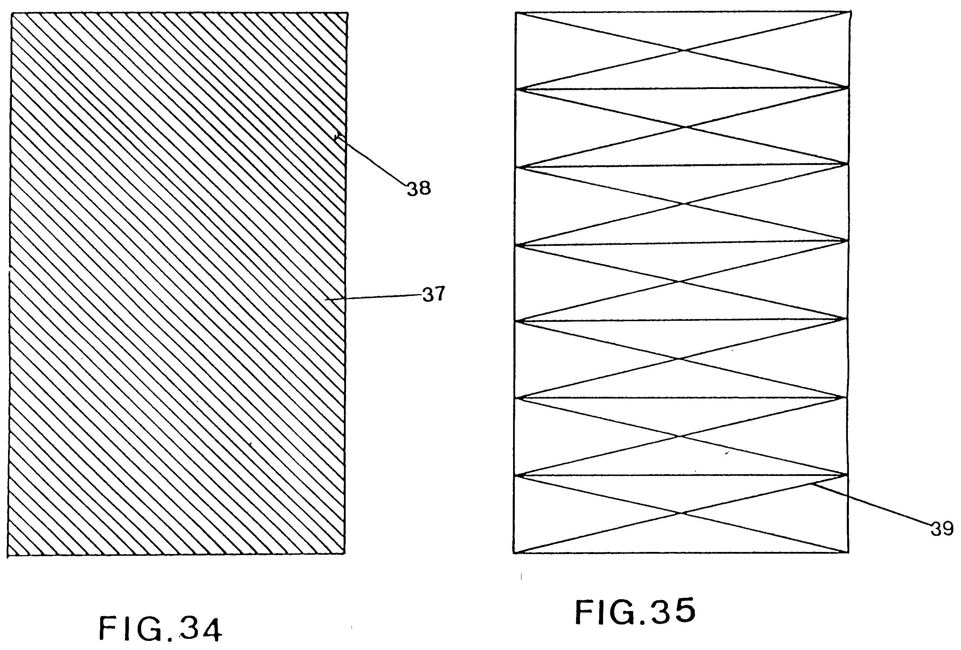

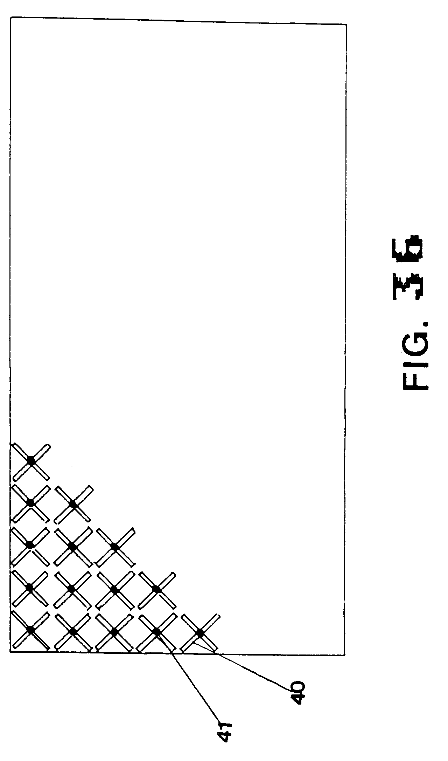

Die Fig. 33 zeigt die Gleitschutzplatte mit schrägem Gleitschutzkanten Bez. 36 vorgesehen, Höhe der Gleitschutzkante ca. 5-10mm. Fig. 34 zeigt die Gleitschutzplatte mit schräg verlaufenden Gleitschutzrillen Bez. 37, mit Höhe von ca. 3mm und einem Abstand von ca. 2mm siehe Bez. 38. Fig. 35 zeigt die Gleitschutzplatte mit einem Spitzzackprofil mit einer Höhe von ca. 3mm mitgeformt vorgesehen siehe Bez. 39. Fig. 36 zeigt die Gleitschutzplatte mit mitgeformten kreuzkantigen Profil von 2-3mm Bez. 40, in der Mitte wurde ein Stahlstift oder Spikes von 2-3mm vorgesehen Bez. 41. Die Fig. 37 zeigt die Gleitschutzplatte mit Gleitschutzzacken durchlaufend über die gesamte Gleitschutzfläche mitgeformt vorgesehen siehe Bez. 29. Weiters könnte der Sicherheits-Unterlegekeil bzw. Hemmschuh mit einem vollautomatischen Hebearm integriert vorgesehen werden. Der mit vorgesehenem Ein- u. Ausschwenkarm der vom Fahrersitz aus in Betrieb genommen werden kann. Der bewegliche Schwenk u. Hebearm führt vollautomatisch gesteuert den Sicherheits-Unterlegekeil zum Reifen, und wird sicher angelegt. Dadurch schaltet sich auch ein Wegrutschen oder Wegschwemmen des Sicherheitskeils Vom Reifen aus. Als Sicherheitsfaktor Nr. 2 z.B. wenn ein Kraftfahrer alleine unterwegs ist und bei einer etwas ansteigenden rutschigen Schneefahrbahn stecken bleibt. Sobald die Schneeketten montiert sind, kann der Kraftfahrer noch mit Hilfe des Sicherheits-Unterlegekeils anfahren. Denn der Sicherheitskeil zieht sich durch den vorgesehenen automatischen Schwenkarm, bei Knopfdruck einziehen bzw. einschwenken automatisch ein. Da kommt dieser vollautomatische Sicherheit-Unterlegekeil zum besten Einsatz, da ein Zurückrutschen des LKW's dadurch ausgeschaltet wird. Was aber bei manuellen Unterlegen des Unterlegekeils oft dadurch ein Risiko ist, weil der Kraftfahrer aus dem LKW aussteigen muß. Weiters könnte auch eine Kette, Seil, Stange, Greifarm, am Sicherheitskeil angebracht werden, das den Sicherheitskeil bei Bedarf automatisch einzieht mittels Seilzug usw .

## Patentansprüche

1. Unterlegekeil für Straßenfahrzeuge mit Aufstellfläche, Auflauffläche, Rückenteil und Seitenteilen, dadurch gekennzeichnet, daß die Aufstellfläche Durchbrechungen (7D) aufweist und daß zwischen Auflauffläche und Aufstellfläche eine mit in Richtung der Aufstellfläche vorragenden Gleitschutzzacken oder Spikes (D1,40) versehene Platte schwenkbar und mit der Aufstellfläche in Deckung bringbar gelagert ist, in welcher Stellung die Platte (4) lösbar festlegbar ist und die Gleitschutzzacken durch die Durchbrüche (7D) der Aufstellfläche vorragen.

2. Unterlegekeil nach Anspruch 1, dadurch gekennzeichnet, daß die Platte (4) mittels eInes in eine in einem Plattenansatz ausgebildete Bohrung (A1-A4) und in eine weitere, in einem Seitenteil ausgebildete Bohrung (A1-A4) einführbaren Stiftes (10) lösbar festlegbar ist.

3. Unterlegekeil nach Anspruch 1 oder 2, dadurch gekennzeichnet, daß die Platte (4) mittels einer Feder (5) in Richtung der Auflauffläche vorgespannt ist.

4. Unterlegekeil nach Anspruch 1, 2 oder 3, dadurch gekennzeichnet, daß die Aufstellfläche mit einer Heizplatte, insbesondere einer mit einem eingebauten Thermostat und Zeitschalter gesteuerten Heizplatte, wärmeleitend verbunden ist. (Fig. 15)

5. Unterlegekeil nach einem der Ansprüche 1 bis 4, dadurch gekennezichnet, daß an der Außenseite des Rückenteils und/oder der Seitenteile Beleuchtungs-, Rückstrahleinrichtungen (2), Leuchtfarbe oder Leuchtkunststoff oder Spiegel (6) und gegebenenfalls Haltegriffe (9) angeordnet sind.

6. Unterlegekeil nach einem der Ansprüche 1 bis 5, dadurch gekennzeichnet, daß die Aufstellfläche und/oder die Auflauffläche mit rutschhemmenden oder gleitschutzfähigen Belägen bzw. Gleitschutzprofilen (A,B,27,30,33,31) versehen sind.

7. Unterlegekeil nach einem der Ansprüche 1 bis 6, dadurch gekennzeichnet, daß der Unterlegekeil über einen an einem Fahrzeug angelenkten, beweglichen Schwenkarm oder Greifarm bzw. eine Zugvorrichtung gesteuert zu einem Reifen bewegbar und von diesem wegbewegbar ist.

8. Unterlegekeil nach Anspruch 7, dadurch gekennzeichnet, daß die Bewegung des Unterlegekeils durch einen Motor oder eine hydraulische Anlage gesteuert ist.

9. Unterlegekeilnach einem der Ansprüche 1 bis 8, dadurch gekennzeichnet, daß der Unterlegekeil mit einer ein- und ausfahrbaren bzw. ein- und ausklappbaren Auffahrthilfe (23) sowie gegebenenfalls mit Führungsschienen (16) zum Einschieben in eine Halterungsvorrichtung ausgebildet ist. (Fig. 25)

10. Unterlegekeil nach einem der Ansprüche 1 bis 9, dadurch gekennzeichnet, daß der Unterlegekeil aus Holz, Metall, Titan-Metall, Stahl, Präzisionskunststoff, hochwertigem Spezialgußeisen in gegossener bzw. geschweißter Ausführung oder hochwertigen Leichtmetallen bzw. rostfreien, verzinkten Legierungen ausgebildet ist.

## Claims

1. Wheel-chock for vehicles with a surface standing on the ground, a surface for rolling on, a surface on the rear and lateral parts. The surface standing on the ground has got piercings (7D) and between the surface standing on the ground and the surface for rolling on there is an anti- slip plate with spikes (D1, 40). This plate (4) can be panned and can be put in a position so that it covers the surface which stands on the ground. The plate can be removed and fixed and the anti-slip spikes jut out of the piercings (7D) of the surface which stands on the ground.

2. Wheel-chock according to application 1: The plate (4) can be taken off as well as fixed due to a pin which is introduced in a drill-hole in the base to the plate (A1 - A 4) and in a further drill-hole in a lateral part (A1 - A 4).

3. Wheel-chock according to application 1 or 2: The plate (4) is put up in the direction of the surface for rolling with a spring (5).

4. Wheel- chock according to application 1, 2 or 3: The surface which stands on the ground is connected with a heatable plate that is equipped with a thermostat and a time-switch (Fig. 15).

5. Wheel-chock according to applications 1 to 4: the outside of the rear part and or of the lateral parts are equipped with a lighting system, a warning triangle, a reflective coating (2), luminous paint or luminous plastic or an SOS signaling mirror or hazard warning lights in case of emergency.

6. Wheel-chock acording to one of the applications 1 to 5: The surface which stands on the ground and / or the surface for rolling on is covered with all sorts of anti-slip coatings or profiles. Fig 1, 1A, B, 27, 30 to Fig 35.

7. Wheel-chock according to one of the applications 1 to 6: The wheel- chock which is controlled by a swinging arm that is connected to a vehicle and steered from the vehicle can be drawn to the wheel and back again.

8. Wheel-chock according to application 7: **The movement of the wheel-chock can be controlled mechanically, by electricity or by a hydraulic system and / or a gas pressure system or oil pressure system fully automatically controlled.**

9. Wheel-chock acording to one of the applications 1 to 8: The wheel- chock is equipped with a retractable support for driving up (23) and if needed with runners (16) on order to push it into a support (Fig. 25).

10. Wheel-chock according to one of the applications 1 to 9: The wheel-chock is made out of wood, metal, titane-metal, steel, precision plastic material, high quality cast iron either cast or welded, high quality light metals or stainless, zinced alloy.

## Revendications

1. Cale pour les véhicules avec une surface pour le sol, une surface pour les pneus, une surface de derrière et des surfaces latéraux. La surface pour le sol a des percements (7D) et entre la surface pour les pneus et la surface pour le sol il y a une planche avec des indentations contre le glissement (D1, 40). Cette planche se dirige vers la surface pour le sol. La planche est tournante et peut être mise sur la surface pour le sol avec qui elle est congruente. Dans cette position la planche (4) peut être retirée mais aussi fixée. Les indentations sortent des percements(7D) de la surface pour le sol.

2. Cale après la revendication 1 : la planche (4) peut être fixée mais aussi retirée à l'aide d'une fiche. Cette fiche peut être introduite dans un percement qui a éte réalisé dans une rallonge de la planche et dans un autre percement qui a été réalisé dans une surface latérale.

3. Cale après les revendications 1 ou 2: la planche (4) est bandée en sens de la surface pour les pneus à l'aide d'une plume (5).

4. Cale après les revendications 1, 2 ou 3: la surface pour dresser est reliée avec une planche avec la possibilité de chauffage. Cette planche avec la possibilité de chauffage a un thermostat et un programmateur (Fig. 15)

5. Cale après les revendications 1 jusqu'à 4: à l' exterieur de la surface de derrière et / ou des surfaces latéraux il y a des dispositifs de réflexion, un panneau de signalisation spécial (2), **de la peinture lumineuse ou un miroir qui donne le signal SOS ou dispositif de clignotement d'alarme pour les cas d' urgence.**

6. Cale après une des revendications 1 jusqu'à 5: la surface pour le sol et / ou la surface pour les pneus qui sont munies de toutes sortes d' enduit qui empêche le glissement : Fig. 1, 1A, B, 27, 30 jusqu'à fig. 35.

7. Cale après une des revendications 1 jusqu'à 6: la cale peut être transportée vers un pneu et retirée d' un pneu à l' aide d' un bras orientable, tractif qui est fixé sur un véhicule.

8. Cale après la revendication 7: **le mouvement de la cale est commandé mécaniquement, par l' électricité ou par un dispositif hydraulique et/ ou par une pression du gaz ou une pression d' huile entièrement automatiquement.**

9. Cale après une des revendications 1 jusqu'à 8: la cale est munie d' une rampe à chariot respectivement amovible (23) et s' il y a lieu avec des glissières (16) pour insérer dans un dispositif de serrage.

10. Cale après une des revendications 1 jusqu'à 9: la cale est faite de bois, de métal, de titane-métal, de l'acier, de matière plastique de précision, de fer coulé spécial fondu ou soudé ou fait de métaux légers respectivement d' alliages zingués et inoxydables.
